# EUROPÄISCHE PATENTSCHRIFT

(11) **EP 3 939 836 B1**
(45) Veröffentlichungstag und Bekanntmachung des Hinweises auf die Patenterteilung: **20.03.2024**
(21) Anmeldenummer: 21179013.4
(22) Anmeldetag: 11.06.2021
(51) Int. Cl.: B60R 9/10, B60R 9/06

(54) **ABSTANDSVORRICHTUNG FÜR EIN TRÄGERSYSTEM FÜR EIN KRAFTFAHRZEUG**
SPACING DEVICE FOR A HOLDER SYSTEM FOR A MOTOR VEHICLE
DISPOSITIF ENTRETOISE POUR UN SYSTÈME PORTEUR POUR UN VÉHICULE AUTOMOBILE

(30) Priorität: 18.07.2020 DE 102020209015
(43) Veröffentlichungstag der Anmeldung: 19.01.2022
(73) Patentinhaber: ATERA GmbH, 88299 Leutkirch im Allgäu (DE)
(72) Erfinder: Hinderhofer, Jürgen, 88400 Biberach (DE); Pickl, Adolf, 87487 Wiggensbach (DE)
(74) Vertreter: Patentanwälte Ruff, Wilhelm, Beier, Dauster & Partner mbB

(56) Entgegenhaltungen:
- DE-U1-202016 102 961
- US-A1- 2016 052 463

## Beschreibung

Die Erfindung betrifft eine Abstandsvorrichtung für ein Trägersystem für ein Kraftfahrzeug, aufweisend ein Abstandselement, das entlang seiner Längsachse zwischen seinem ersten Stirnende und seinem zweiten Stirnende längserstreckt ist, eine Befestigungseinrichtung, die an dem ersten Stirnende angeordnet und zum Befestigen eines Rahmenprofils eines Ladegutes vorgesehen ist, eine Klemmeinrichtung, die an dem zweiten Stirnende angeordnet und zum Festklemmen an einem fahrzeugfest positionierbaren Trägerprofil des Trägersystems vorgesehen ist, wobei die Klemmeinrichtung relativ zu dem Abstandselement zwischen einer Klemmstellung zum Festklemmen an dem Trägerprofil und einer Freigabestellung zur Freigabe von dem Trägerprofil verlagerbar ist, und wobei die Klemmeinrichtung wenigstens eine erste Klemmbacke und eine zweite Klemmbacke aufweist, die zur Verlagerung der Klemmeinrichtung zwischen der Klemm- und der Freigabestellung jeweils um eine Schwenkachse relativ zu dem Abstandselement schwenkbeweglich verlagerbar sind, und aufweisend eine Stelleinrichtung mit einem Schraubgetriebe, das einends mit der Klemmeinrichtung wirkverbunden ist und mittels dessen eine an der Abstandsvorrichtung angreifende manuelle Drehbetätigungsbewegung in eine Verlagerungsbewegung der Klemmeinrichtung zwischen der Klemm- und der Freigabestellung übersetzbar ist.

Eine derartige Abstandsvorrichtung nach dem Oberbegriff von Anspruch 1 ist aus der DE 20 2016 102 961 U1 bekannt und für ein Trägersystem in Form eines Fahrradträgers für ein Kraftfahrzeug vorgesehen. Die bekannte Abstandsvorrichtung weist ein längserstrecktes Abstandselement in Form einer Hülse, eine als Klammer bezeichnete Befestigungsvorrichtung und eine Klemmgruppe mit mindestens zwei Klemmelementen auf. Die Klammer ist einends und die Klemmgruppe ist andernends an der Hülse angeordnet. Zur Verlagerung der Klemmgruppe zwischen einem gelösten Zustand und einem Klemmzustand ist eine Stelleinrichtung mit einem Schraubgetriebe vorgesehen. Das Schraubgetriebe ist getriebeausgangsseitig mit den beiden Klemmelementen und getriebeeingangsseitig mit einem Handrad der Stelleinrichtung wirkverbunden. Die Stelleinrichtung weist zudem einen fest mit der Hülse verbundenen Steuerkonus auf, in welchem Verbindungsenden der beiden Klemmelemente axialbeweglich gelagert sind. Eine um die Längsachse gerichtete manuelle Drehbetätigung des Handrads bewirkt, dass die Klemmelemente in axialer Richtung der Hülse relativ zu dem Steuerkonus verlagert und hierdurch gegeneinander angestellt werden.

Aufgabe der Erfindung ist es, eine Abstandsvorrichtung der eingangs genannten Art bereitzustellen, die einen gegenüber dem Stand der Technik vereinfachten Aufbau aufweist und gleichzeitig eine vereinfachte Bedienung ermöglicht.

Diese Aufgabe wird dadurch gelöst, dass eine Lagereinrichtung vorgesehen ist, mittels derer die Klemmeinrichtung und das Abstandselement um die Längsachse relativ zueinander drehbeweglich aneinander gelagert sind, und dass das Schraubgetriebe andernends mit dem Abstandselement wirkverbunden ist, wodurch eine um die Längsachse gerichtete manuelle Drehung des Abstandselements die Verlagerungsbewegung der Klemmeinrichtung zwischen der Klemm- und der Freigabestellung bewirkt. Durch die erfindungsgemäße Lösung kann insbesondere auf ein gesondertes Betätigungselement, beispielsweise ein Handrad, zur Verlagerung der Klemmeinrichtung zwischen der Klemm- und der Freigabestellung verzichtet werden. Stattdessen ermöglicht die erfindungsgemäße Lösung, dass die Drehbetätigung an dem Abstandselement selbst erfolgen kann. Hierdurch weist das Abstandselement eine besonders vorteilhafte Mehrfachfunktion auf. Zum einen stellt das Abstandselement einen zum zweckmäßigen Transport des Ladegutes erforderlichen Längsabstand zwischen der Befestigungseinrichtung und der Klemmeinrichtung her. Zum anderen fungiert das Abstandselement gleichzeitig als Betätigungselement zur Verlagerung der Klemmeinrichtung. Im Ergebnis ermöglicht die erfindungsgemäße Lösung einen gegenüber dem Stand der Technik deutlich vereinfachten Aufbau der Abstandsvorrichtung bei gleichzeitig vereinfachter Bedienung. Die erfindungsgemäß vorgesehene Lagereinrichtung gewährleistet hierbei die zur Drehbetätigung des Abstandselements erforderliche Relativbeweglichkeit zwischen der Klemmeinrichtung und dem Abstandselement. Mit anderen Worten ausgedrückt, stellt die Lagereinrichtung eine um die Längsachse des Abstandselements drehbewegliche Verbindung zwischen dem Abstandselement und der Klemmeinrichtung her. Das Schraubgetriebe bildet eine kraft- und bewegungsübertragende mechanische Wirkverbindung zwischen dem Abstandselement und der Klemmeinrichtung. Hierzu ist das Schraubgetriebe einends mit der Klemmeinrichtung und andernends mit dem Abstandselement wirkverbunden. Mit anderen Worten ausgedrückt, ist die Klemmeinrichtung mit einem Getriebeausgang und das Abstandselement ist mit einem Getriebeeingang des Schraubgetriebes verbunden. Hierdurch kann die um die Längsachse gerichtete manuelle Drehung des Abstandselements in die Verlagerungsbewegung der Klemmeinrichtung und damit in eine Schwenkbewegung der ersten Klemmbacke und der zweiten Klemmbacke umgewandelt werden. Vorzugsweise ist das Abstandselement ein gerade längserstrecktes Profil, bevorzugt ein kreiszylindrisches oder ovalisiertes Hohlprofil. Die Befestigungseinrichtung dient der Befestigung des Rahmenprofils des mittels des Trägersystems zu transportierenden Ladeguts. Die erfindungsgemäße Lösung ist besonders bevorzugt geeignet für ein Trägersystem in Form eines Heckträgers zum Transport wenigstens eines Fahrrads. In diesem Fall ist das Rahmenprofil ein Rahmenrohr des zu transportierenden Fahrrads. Die Befestigungseinrichtung ist vorzugsweise zum Umgreifen des Rahmenprofils eingerichtet. Hierzu kann die Befestigungseinrichtung zueinander relativbewegliche Klemmelemente, ein Rastband oder dergleichen aufweisen. Die erste Klemmbacke und die zweite Klemmbacke sind in der Klemmstellung um ihre jeweilige Schwenkachse aufeinander zu geschwenkt, so dass das Trägerprofil zwischen den beiden Klemmbacken eingeklemmt und im Ergebnis die Abstandsvorrichtung an dem Trägerprofil festgeklemmt ist. In der Freigabestellung sind die beiden Klemmbacken um ihre jeweilige Schwenkachse voneinander weg geschwenkt, so dass die Abstandsvorrichtung von dem Trägerprofil entnehmbar ist. Zur Bewegungs- und Kraftübertragung kann das Schraubgetriebe mittelbar oder unmittelbar an der ersten Klemmbacke und der zweiten Klemmbacke angreifen. Vorzugsweise sind die beiden Schwenkachsen, die auch als erste Schwenkachse und zweite Schwenkachse bezeichnet werden können, parallel erstreckt und/oder senkrecht zur Längsachse des Abstandselements orientiert.

In Ausgestaltung der Erfindung weist die Lagereinrichtung einen Steckabschnitt auf, der um die Längsachse des Abstandselements drehbeweglich und in Radialrichtung des Abstandselements formschlüssig mit dem zweiten Stirnende zusammengesteckt ist. Diese Ausgestaltung der Erfindung ermöglicht eine besonders einfache Montage der Lagereinrichtung an dem Abstandselement und damit auch einen nochmals vereinfachten Aufbau der Abstandsvorrichtung. Die Lagereinrichtung wird mit dem Steckabschnitt auf das zweite Stirnende aufgesteckt oder in eine hierfür vorgesehene axiale Aussparung des zweiten Stirnendes eingesteckt. Der Steckabschnitt kann je nachdem insbesondere in Form einer Muffe zum Aufstecken oder eines Zapfens zum Einstecken ausgebildet sein. Zudem kann durch diese Ausgestaltung der Erfindung auf ein gesondertes Lagerelement zur drehbeweglichen Lagerung der Lagereinrichtung und damit der Klemmeinrichtung verzichtet werden. Denn der Steckabschnitt ist um die Längsachse drehbeweglich mit dem zweiten Stirnende zusammengesteckt. Vorteilhafterweise ist der Steckabschnitt und/oder das zweite Stirnende des Abstandselements um die Längsachse rotationssymmetrisch gestaltet.

In weiterer Ausgestaltung der Erfindung weist die Lagereinrichtung einen Lagerabschnitt auf, an welchem die erste Klemmbacke und die zweite Klemmbacke um die jeweilige Schwenkachse schwenkbeweglich gelagert sind. Der Lagerabschnitt dient insoweit einer schwenkbeweglichen Lagerung der Klemmbacken um ihre jeweilige Schwenkachse. Die beiden Klemmbacken sind gemeinsam mit der Lagereinrichtung relativ zu dem Abstandselement um die Längsachse drehbeweglich an dem Lagerabschnitt gelagert. Die Schwenkachsen können in Bezug auf die Lagereinrichtung rotatorisch und/oder translatorisch feststehend an dem Lagerabschnitt festgelegt oder entsprechend relativbeweglich an diesem gelagert sein.

In weiterer Ausgestaltung der Erfindung sind die erste Klemmbacke und die zweite Klemmbacke relativ zu der Lagereinrichtung entlang der Längsachse unbeweglich an dem Lagerabschnitt gelagert. Dementsprechend sind die Schwenkachsen relativ zu der Lagereinrichtung feststehend an derselben gelagert. Bei der Verlagerung zwischen der Klemm- und der Freigabestellung findet daher lediglich eine Schwenkbewegung der Klemmbacken relativ zu der Lagereinrichtung und nicht etwa eine zusätzliche relative translatorische Verlagerung der Klemmbacken statt. Dies gewährleistet, dass ein zwischen der Befestigungseinrichtung und der Klemmeinrichtung erstreckter Axialabstand während der Verlagerungsbewegung der Klemmeinrichtung unverändert bleibt. Dies kann besondere Vorteile bieten.

In weiterer Ausgestaltung der Erfindung weist die Lagereinrichtung ein Lagergehäuse auf, das relativ drehbeweglich mit dem zweiten Stirnende des Abstandselements zusammengesteckt ist, und in welchem die erste Klemmbacke und die zweite Klemmbacke wenigstens abschnittsweise im Bereich der jeweiligen Schwenkachse aufgenommen sind. Hierdurch sind die Klemmbacken im Bereich ihrer jeweiligen Schwenkachse vor äußeren Einflüssen, insbesondere Nässe, Staub, und/oder Schmutz, geschützt in dem Lagergehäuse aufgenommen. Dies wirkt einer Beeinträchtigung der Schwenkbeweglichkeit der Klemmbacken entgegen. Vorzugsweise weist das Lagergehäuse an seinem dem Abstandselement zugeordneten Stirnendbereich den Steckabschnitt zum Zusammenstecken mit dem zweiten Stirnende auf. Weiter vorzugsweise weist das Lagergehäuse eine in Richtung des Trägerprofils offene Gehäuseaussparung auf, in welcher der Lagerabschnitt zur Lagerung der ersten Klemmbacke und der zweiten Klemmbacke angeordnet ist. Die beiden Klemmbacken ragen in Richtung des Trägerprofils aus der Gehäuseaussparung heraus.

In weiterer Ausgestaltung der Erfindung weist das Schraubgetriebe ein Gewindespindelelement und ein Gewindemutterelement auf, die zur Übersetzung der Drehbewegung des Abstandselements in die Verlagerungsbewegung der Klemmeinrichtung schraubbeweglich zusammenwirken. Diese Ausgestaltung der Erfindung ermöglicht einen besonders einfachen Aufbau des Schraubgetriebes. Vorzugsweise ist das Schraubgetriebe selbsthemmend gestaltet. Dies wirkt einer unbeabsichtigten Verlagerung der Klemmeinrichtung von der Klemm- in die Freigabestellung entgegen. Die Selbsthemmung kann durch eine hierfür geeignete Gewindegestaltung des Gewindespindelelements und des Gewindemutterelements erreicht werden. Vorzugsweise ist jeweils ein metrisches Gewinde an dem Gewindespindel- und dem Gewindemutterelement vorgesehen. Vorzugsweise ist das Gewindespindelelement relativ zu dem Abstandselement axialbeweglich und die Gewindemutter ist gemeinsam mit dem Abstandselement um dessen Längsachse drehbeweglich. Alternativ kann das Gewindespindelelement axialfest und gemeinsam mit dem Abstandselement drehbeweglich und das Gewindemutterelement in Bezug auf die Längsachse drehfest und axialbeweglich sein. Je nachdem, ist entweder das Gewindespindelelement mit der Klemmeinrichtung und das Gewindemutterelement mit dem Abstandselement wirkverbunden oder umgekehrt. Vorzugsweise sind das Gewindemutterelement und das Gewindespindelelement jeweils koaxial zu der Längsachse des Abstandselements orientiert.

In weiterer Ausgestaltung der Erfindung ist das Gewindemutterelement um die Längsachse drehmomentfest und axial unbeweglich an dem zweiten Stirnende des Abstandselements befestigt, und das Gewindespindelelement greift entlang der Längsachse beweglich und axial kraft- und bewegungsübertragend an der ersten Klemmbacke und der zweiten Klemmbacke an. Dementsprechend wird das Gewindemutterelement bei einer Drehbewegung des Abstandselements gemeinsam mit diesem um dessen Längsachse rotiert. Durch die schraubbewegliche Wirkverbindung mit dem Gewindespindelelement wird dieses infolge der Drehbewegung des Gewindemutterelements entlang der Längsachse translatorisch verlagert. Die Verlagerungsbewegung des Gewindespindelelements bewirkt die Verlagerungsbewegung der Klemmbacken um ihre jeweilige Schwenkachse. Das Gewindespindelelement greift unmittelbar oder mittelbar an den beiden Klemmbacken an.

In weiterer Ausgestaltung der Erfindung ist das Gewindespindelelement koaxial zu der Längsachse des Abstandselements orientiert und greift über ein Bolzenelement an der ersten Klemmbacke und der zweiten Klemmbacke an, wobei das Bolzenelement parallel zu den Schwenkachsen orientiert ist und jeweils eine Bolzenaufnahme der Klemmbacken durchragt, die um jeweils einen Hebelarm von der jeweiligen Schwenkachse beabstandet durch die jeweiligen Klemmbacke erstreckt ist. Das auf diese Weise orientierte und angeordnete Bolzenelement gewährleistet eine vorteilhafte Kraft- und Bewegungsübertragung von dem Gewindespindelelement auf die erste Klemmbacke und die zweite Klemmbacke. Zu diesem Zweck greift das Bolzenelement an beiden Klemmbacken an. Diese sind zur Aufnahme des Bolzenelements mit den besagten Bolzenaufnahmen versehen, die als Durchgangsöffnungen ausgebildet und parallel zu den Schwenkachsen erstreckt sind. Die Schwenkachsen sind in Bezug auf die Längsachse in radialer Richtung nach außen versetzt von dem Bolzenelement angeordnet, wodurch die besagten Hebelarme ausgebildet sind. Durch die Hebelarme kann eine zusätzliche Übersetzung zwischen der Drehbetätigung des Abstandselements und der Verlagerungsbewegung der beiden Klemmbacken erreicht werden. Hierdurch kann mittels einer relativ leichtgängigen manuellen Drehbetätigung des Abstandselements eine vergleichsweise hohe Klemmkraft in der Klemmstellung generiert werden.

In weiterer Ausgestaltung der Erfindung ist die Befestigungseinrichtung um die Längsachse drehmomentfest an dem ersten Stirnende des Abstandselements abgestützt, wodurch eine um die Längsachse gerichtete manuelle Drehung der Befestigungseinrichtung die Verlagerungsbewegung der Klemmeinrichtung zwischen der Klemm- und der Freigabestellung bewirkt. Bei dieser Ausgestaltung der Erfindung kann ein Anwender zur Betätigung der Klemmeinrichtung manuell an der Befestigungseinrichtung angreifen und diese um die Längsachse des Abstandselements drehen. Aufgrund der drehmomentfesten Abstützung an dem ersten Stirnende wird hierdurch auch das Abstandselement um die Längsachse gedreht und somit die Klemmeinrichtung zwischen der Klemm- und der Freigabestellung verlagert. Da die Befestigungseinrichtung an dem ersten Stirnende angeordnet ist, kann eine besonders ergonomische, nämlich an dem äußeren Ende der Abstandsvorrichtung angreifende, Betätigung erfolgen.

In weiterer Ausgestaltung der Erfindung ist die Befestigungseinrichtung mittels eines Drehanschlags begrenzt drehbeweglich drehmomentfest an dem ersten Stirnende des Abstandselements abgestützt. Der Drehanschlag bewirkt eine begrenzte Drehbeweglichkeit der Befestigungseinrichtung um die Längsachse des Abstandselements. Hierdurch wird vermieden, dass eine manuelle Drehung der Befestigungseinrichtung, die allein zur Positionierung der Befestigungseinrichtung an dem Rahmenprofil des zu transportierenden Ladeguts vorgesehen ist, unbeabsichtigter Weise in die Verlagerungsbewegung der Klemmeinrichtung umgesetzt wird. Mit anderen Worten ausgedrückt, wird vermieden, dass die Klemmeinrichtung bei einer zur Befestigung der Befestigungseinrichtung vorgesehenen Verlagerung derselben unbeabsichtigt in die Freigabestellung verlagert wird. Der Drehanschlag weist vorzugsweise einen ersten Anschlagabschnitt, der an der Befestigungseinrichtung angeordnet ist, und einen zweiten Anschlagabschnitt, der an dem Abstandselement angeordnet ist, auf. Die beiden Anschlagabschnitte sind relativ zueinander um die Längsachse drehbeweglich. Sobald die beiden Anschlagabschnitte in Kontakt gelangen, erfolgt eine drehmomentfeste Übertragung der Drehung der Befestigungseinrichtung auf das Abstandselement. Vorzugsweise ist der Drehanschlag derart gestaltet, dass die Befestigungseinrichtung um 300° bis 340°, bevorzugt um 320°, relativ zu dem Abstandselement um die Längsachse gedreht werden kann, bevor eine Begrenzung der Drehbeweglichkeit und hierdurch eine drehmomentfeste Abstützung bewirkt ist.

In weiterer Ausgestaltung der Erfindung weisen die Klemmbacken an ihren einander zugewandten Innenseiten jeweils eine konkave Klemmfläche und eine Schrägfläche auf, wobei die Klemmflächen eine zylindrische Klemmaussparung zum Klemmen des Trägerprofils ausbilden und die Schrägflächen einen entlang der Längsachse des Abstandselements in die Klemmaussparung mündenden Einführspalt zum Einführen des Trägerprofils ausbilden, und wobei der Einführspalt relativ zu einer Axialrichtung der Klemmaussparung schräg längserstreckt ist. Die Klemmaussparung ist zur Aufnahme des fahrzeugfest positionierbaren Trägerprofils des Trägersystems vorgesehen. Dieses ist in der Klemmstellung zwischen den konkaven Klemmflächen eingeklemmt. Zum Einführen des Trägerprofils in die Klemmaussparung wird dieses durch den Einführspalt bewegt bzw. die Abstandsvorrichtung wird mit dem Einführspalt voran über das Trägerprofil geführt. Der Einführspalt ist zwischen den Schrägflächen der Klemmbacken ausgebildet und relativ zu der Axialrichtung der Klemmaussparung schräg längserstreckt. Die Axialrichtung der Klemmaussparung ist vorzugsweise parallel zu den Schwenkachsen der Klemmbacken orientiert. Durch die schräge Längserstreckung des Einführspalts wird insbesondere vermieden, dass sich die Abstandsvorrichtung bei einer Verlagerung der Klemmeinrichtung von der Freigabe- in die Klemmstellung unbeabsichtigt von dem Trägerprofil löst. Mit anderen Worten ausgedrückt, wirken die Schrägflächen an den Innenseiten der Klemmbacken einem ungewollten Herausrutschen des Trägerprofils aus der Klemmaussparung entgegen, solange die Klemmeinrichtung die Freigabestellung einnimmt und/oder noch nicht vollständig in die Klemmstellung verlagert ist.

Die Erfindung betrifft zudem ein Trägersystem für ein Kraftfahrzeug, mit einem fahrzeugfest positionierbaren Trägerprofil und einer an dem Trägerprofil festgeklemmten Abstandsvorrichtung, die nach einem der vorhergehenden Ansprüche gestaltet ist. Vorzugsweise ist das Trägersystem ein Heckträger, der zum kraftfahrzeugseitigen Transport wenigstens eines Fahrrads vorgesehen ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Abstandsvorrichtung, die an einem bügelförmigen Trägerprofil einer Ausführungsform eines erfindungsgemäßen Trägersystems festgeklemmt ist,
- Fig. 2: die Abstandsvorrichtung nach Fig. 1 in einer weiteren perspektivischen Darstellung,
- Fig. 3: die Abstandsvorrichtung nach den Fig. 1 und 2 in einer Seitenansicht,
- Fig. 4: eine schematische Längsschnittdarstellung der Abstandsvorrichtung nach den Fig. 1 bis 3,

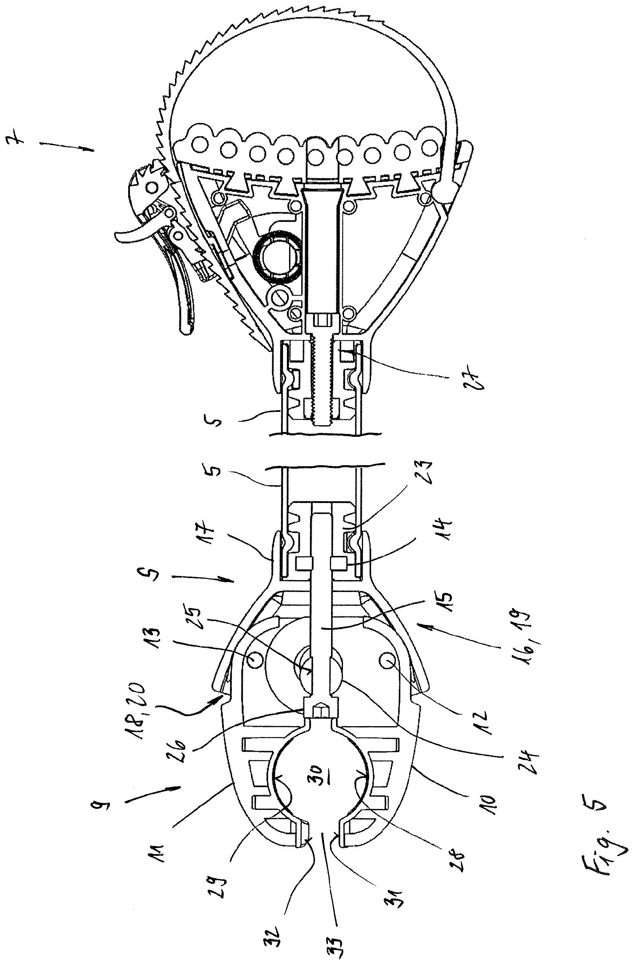

- Fig. 5: eine weitere und bereichsweise abgeschnittene Längsschnittdarstellung der Abstandsvorrichtung nach den Fig. 1 bis 4,

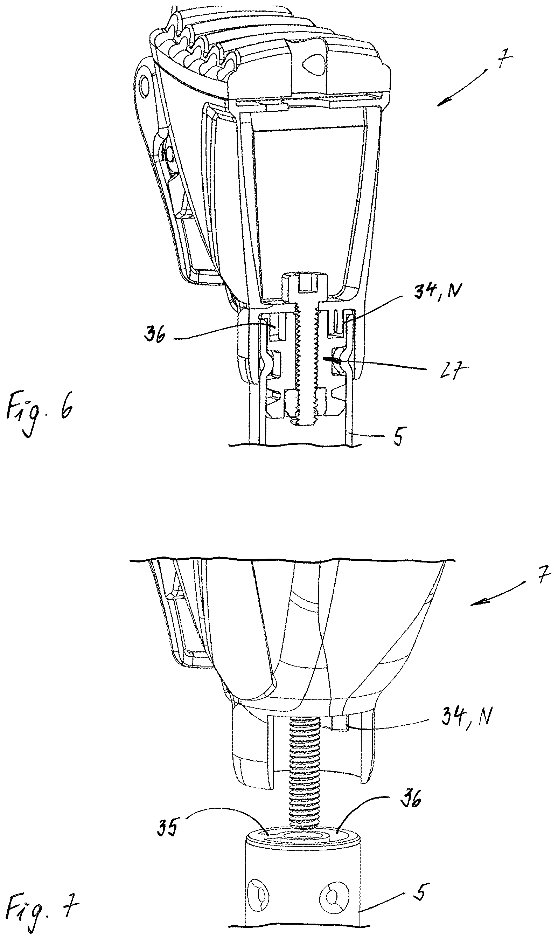

- Fig. 6: in einer perspektivischen Schnittdarstellung die Abstandsvorrichtung nach den Fig. 1 bis 5 im Bereich einer Befestigungseinrichtung und
- Fig. 7: die Abstandsvorrichtung nach den Fig. 1 bis 6 in einer explodierten Darstellung im Bereich eines Drehanschlags zur begrenzt drehbeweglichen drehmomentfesten Abstützung der Befestigungseinrichtung.

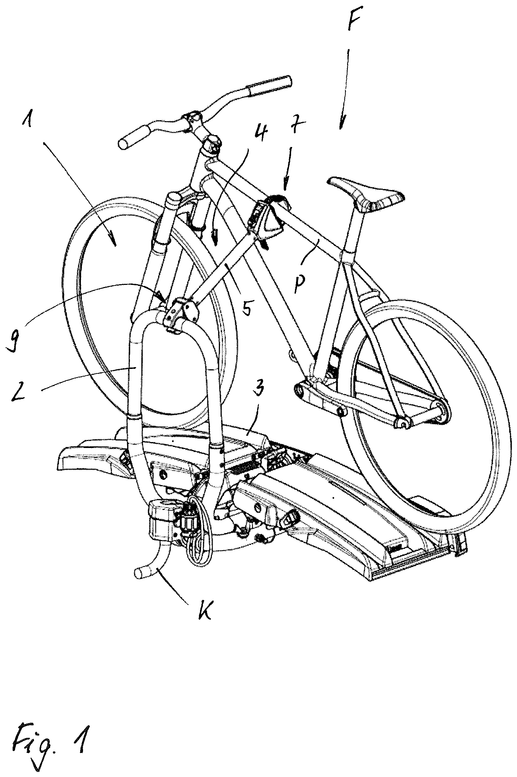

Gemäß Fig. 1 ist ein Trägersystem 1 in Form eines Heckträgers für ein nicht näher gezeigtes Kraftfahrzeug vorgesehen. Das Trägersystem 1 dient zum kraftfahrzeugseitigen Transport wenigstens eines Fahrrads F und wird auf grundsätzlich bekannte Weise auf einem nicht näher gezeigten Kugelkopf einer abgeschnitten dargestellten Anhängerkupplung K des Kraftfahrzeugs montiert.

Das Trägersystem 1 weist ein fahrzeugfest positionierbares Trägerprofil 2 auf, das bei der gezeigten Ausführungsform bügelförmig gestaltet ist und in etwa vertikaler Richtung von einem nicht näher bezeichneten Grundträger des Trägersystems 1 aufragt. Das Trägersystem 1 weist bei der gezeigten Ausführungsform zudem wenigstens eine auf dem Grundträger abgestützte Radschiene 3 auf, auf welcher das Fahrrad F in etwa aufrecht stehend mit seinem Vorder- und Hinterrad abgestützt ist. Um das Fahrrad F in der in etwa aufrecht stehenden Position zu sichern, weist das Trägersystem 1 eine Abstandsvorrichtung 4 auf, die auch als Abstandshalter oder Abstandsstütze bezeichnet werden kann.

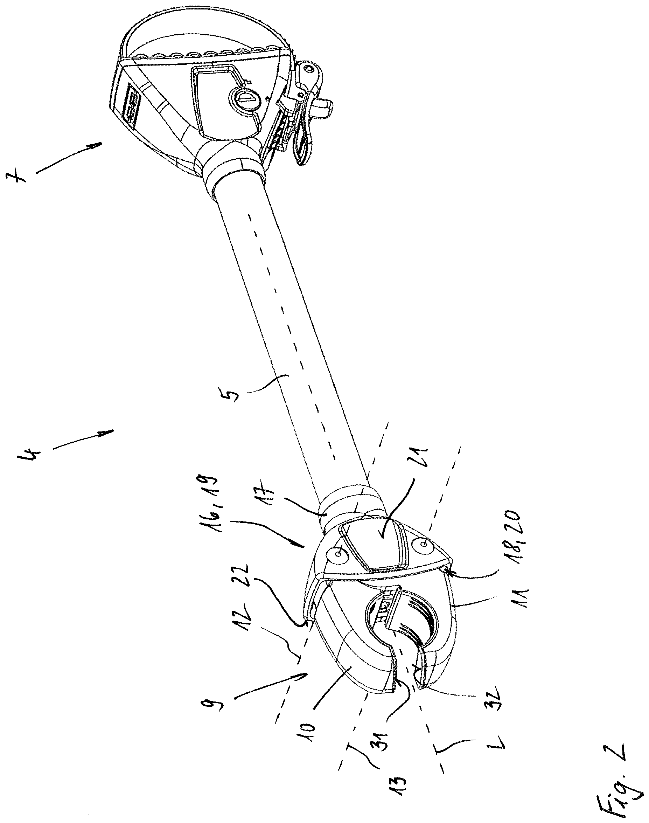

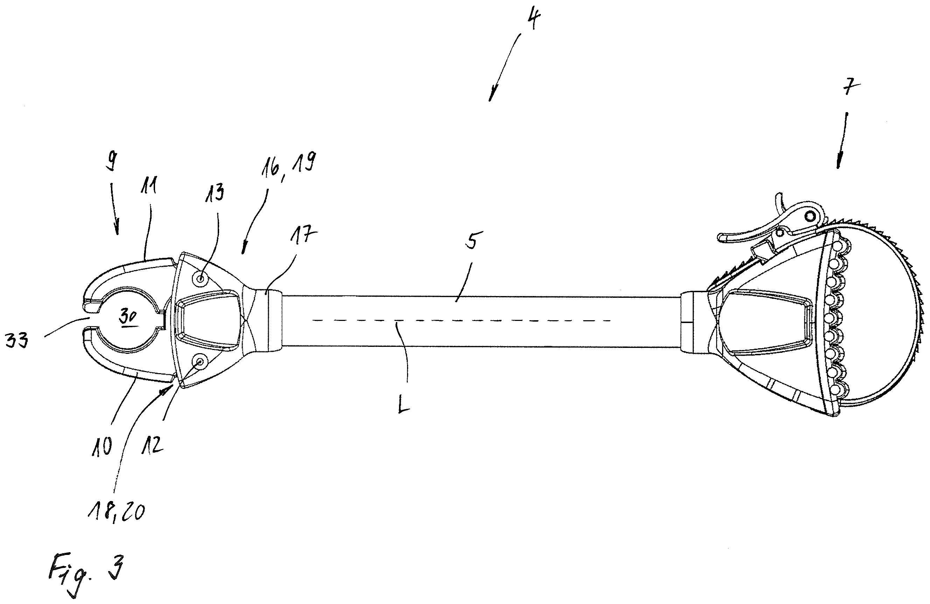

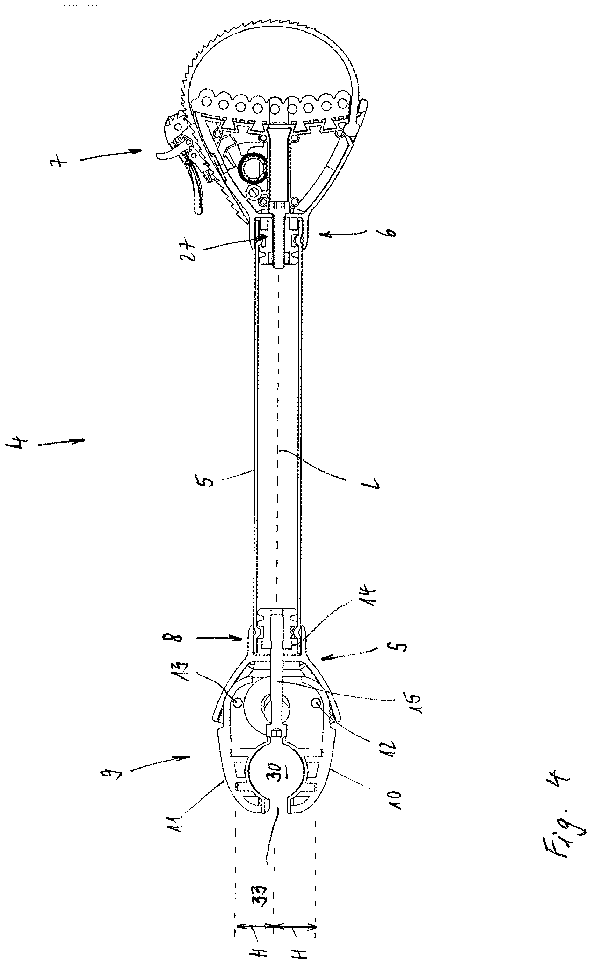

Die Abstandsvorrichtung 4 weist ein entlang seiner Längsachse L (Fig. 2, 3, 4) längserstrecktes Abstandselement 5, eine einends an einem ersten Stirnende 6 des Abstandselements 5 angeordnete Befestigungseinrichtung 7 sowie eine andernends an einem zweiten Stirnende 8 des Abstandselements 5 angeordnete Klemmeinrichtung 9 auf. Die Befestigungseinrichtung 7 dient zur Sicherung eines Rahmenprofils P des Fahrrads F. Die Klemmeinrichtung 9 dient zum Festklemmen der Abstandsvorrichtung 4 an dem bügelförmigen Trägerprofil 2.

Die Klemmeinrichtung 9 weist wenigstens eine erste Klemmbacke 10 und eine zweite Klemmbacke 11 auf, die um jeweils eine Schwenkachse 12, 13 relativ zu dem Abstandselement 5 schwenkbeweglich verlagerbar sind. Die den Klemmbacken 10, 11 zugeordneten Schwenkachsen 12, 13 können auch als erste Schwenkachse 12 und zweite Schwenkachse 13 bezeichnet werden.

Die erste Schwenkachse 12 und die zweite Schwenkachse 13 sind vorliegend parallel zueinander orientiert. Zudem sind beide Schwenkachsen 12, 13 senkrecht zur Längsachse L des Abstandselements 5 ausgerichtet.

Zum Festklemmen und Lösen von dem Trägerprofil 2 ist die Klemmeinrichtung 9 zwischen einer Klemmstellung und einer Freigabestellung verlagerbar. Die Klemmstellung ist anhand der vorliegenden Figuren dargestellt. Die Freigabestellung ist zeichnerisch nicht dargestellt. In der Klemmstellung sind die erste Klemmbacke 10 und die zweite Klemmbacke 11 um ihre jeweilige Schwenkachse 12 bzw. 13 aufeinander zu geschwenkt. In der Klemmstellung umgreifen die beiden Klemmbacken 10, 11 das Trägerprofil 2, so dass die Abstandsvorrichtung 4 an dem Trägerprofil 2 festgeklemmt ist. Dementgegen sind die beiden Klemmbacken 10, 11 in der Freigabestellung um ihre Schwenkachse 12 bzw. 13 voneinander weg geschwenkt. In der Freigabestellung kann die Abstandsvorrichtung 4 relativ zu dem Trägerprofil 2 verschwenkt oder entlang dessen Axialrichtung verschoben oder vollständig von dem Trägerprofil 2 entnommen werden.

Zur Verlagerung der Klemmeinrichtung 9 zwischen der Klemm- und der Freigabestellung weist die Abstandsvorrichtung 4 eine Stelleinrichtung S mit einem Schraubgetriebe 14, 15 auf. Das Schraubgetriebe 14, 15 ist einends auf noch näher beschriebene Weise mit der Klemmeinrichtung 9 wirkverbunden und derart eingerichtet, dass eine an der Abstandsvorrichtung 4 angreifende manuelle Drehbetätigungsbewegung in eine Verlagerungsbewegung der Klemmeinrichtung 9 zwischen der Klemm- und der Freigabestellung übersetzbar ist.

Um eine an dem Abstandselement 5 selbst angreifende Drehbetätigungsbewegung und damit eine besonders einfache Bedienung der Abstandsvorrichtung 4 zu ermöglichen, ist eine Lagereinrichtung 16 vorgesehen, mittels derer die Klemmeinrichtung 9 und das Abstandselement 5 um die Längsachse L relativ zueinander drehbeweglich aneinander gelagert sind, und das Schraubgetriebe 14, 15 ist andernends mit dem Abstandselement 5 wirkverbunden. Hierdurch kann mittels einer manuellen Drehung des Abstandselements 5 um die Längsachse L die Verlagerungsbewegung der Klemmeinrichtung 9 zwischen der Klemm- und der Freigabestellung bewirkt werden. Ein gesondertes Betätigungselement ist hierfür nicht erforderlich. Vielmehr kommt dem Abstandselement 5 eine besonders vorteilhafte Mehrfachfunktion zu. Hierdurch kann eine erforderliche Anzahl an Bauteilen reduziert und ein besonders einfacher Aufbau der Abstandsvorrichtung 4 erreicht werden.

Nachfolgend werden weitere vorteilhafte gegenständliche und funktionelle Merkmale der vorliegenden Ausführungsform erörtert. Diese Merkmale sind im Hinblick auf die Ausführung der Erfindung als nicht unbedingt wesentlich zu erachten.

Das Abstandselement 5 ist vorliegend als Abstandsrohr mit einem kreiszylindrischen Hohlquerschnitt ausgebildet und aus einer Aluminiumlegierung gefertigt. Bei einer nicht gezeigten Ausführungsform ist anstelle eines kreiszylindrischen Hohlquerschnitts ein ovaler Querschnitt vorgesehen.

Die Lagereinrichtung 16 weist einen Steckabschnitt 17 und einen Lagerabschnitt 18 auf. Der Steckabschnitt 17 ist dem zweiten Stirnende 8 des Abstandselements 5 zugewandt und um die Längsachse L drehbeweglich mit diesem zusammengesteckt. In Radialrichtung des Abstandselements 5 ist die Steckverbindung zwischen dem Steckabschnitt 17 und dem zweiten Stirnende 8 bzw. dem Abstandselement 5 formschlüssig. Bei der gezeigten Ausführungsform ist der Steckabschnitt 17 auf das zweite Stirnende 8 aufgesteckt. Dabei umgreift der Steckabschnitt 17 das zweite Stirnende 8 in Umfangsrichtung. Das zweite Stirnende 8 ragt in axialer Richtung in den Steckabschnitt 17 hinein. Insoweit bildet der Steckabschnitt 17 eine zylindrische Steckaufnahme für den zylindrischen, genauer: kreiszylindrischen, Außenumfang des Abstandselements 5 im Bereich des zweiten Stirnendes 8.

Bei einer nicht gezeigten Ausführungsform ist der Steckabschnitt in das zweite Stirnende des Abstandselements eingesteckt. In diesem Fall bildet der stirnendseitig offene Hohlquerschnitt des Abstandselements eine Steckaufnahme für den einzusteckenden Steckabschnitt.

Die um die Längsachse L drehbewegliche Steckverbindung zwischen dem Steckabschnitt 17 und dem zweiten Stirnende 8 gewährleistet die zur Drehbetätigung des Abstandselements 5 erforderliche Relativbeweglichkeit gegenüber der Klemmeinrichtung 9.

Der Lagerabschnitt 18 ist zur Lagerung der Klemmeinrichtung 9, genauer: der ersten Klemmbacke 10 und der zweiten Klemmbacke 11, vorgesehen. Dementsprechend sind die erste Klemmbacke 10 und die zweite Klemmbacke 11 um die jeweilige Schwenkachse 12 bzw. 13 an dem Lagerabschnitt 18 gelagert. Bei der gezeigten Ausführungsform sind die erste Schwenkachse 12 und die zweite Schwenkachse 13 relativ zu dem Lagerabschnitt 18 feststehend angeordnet. Dementsprechend sind die erste Klemmbacke 10 und die zweite Klemmbacke 11 relativ zu dem Lagerabschnitt 18 und damit auch der Lagereinrichtung 16 entlang der Längsachse L unbeweglich.

Bei einer nicht gezeigten Ausführungsform sind die beiden Schwenkachsen relativ zu der Lagereinrichtung translatorisch verlagerbar. Dementsprechend führen die Klemmbacken bei der Verlagerung zwischen der Klemm- und der Freigabestellung zusätzlich zu der Schwenkbewegung eine translatorische Bewegungskomponente aus.

Die Lagereinrichtung 16 ist vorliegend in Form eines Lagergehäuses 19 gestaltet. Der Steckabschnitt 17 und der Lagerabschnitt 18 sind an dem Lagergehäuse 19 ausgebildet. Das Lagergehäuse 19 ist bei der gezeigten Ausführungsform einstückig aus Kunststoff gefertigt. Das Lagergehäuse 19 ist mittels des Steckabschnitts 17 relativ drehbeweglich mit dem zweiten Stirnende 8 zusammengesteckt. Die erste Klemmbacke 10 und die zweite Klemmbacke 11 sind im Bereich der jeweiligen Schwenkachse 12 bzw. 13 in dem Lagergehäuse 19, genauer: dessen Lagerabschnitt 18, aufgenommen. Mit anderen Worten ausgedrückt, bildet eine Gehäuseaussparung 20 des Lagergehäuses 19 den Lagerabschnitt 18. Die Gehäuseaussparung 20 ist in Richtung des zu klemmenden Trägerprofils 2 entlang der Längsachse L offen. Die erste Klemmbacke 10 und die zweite Klemmbacke 11 ragen entlang der Längsachse L in Richtung des Trägerprofils 2 aus der Gehäuseaussparung 20 heraus. Das Lagergehäuse 19 weitet sich ausgehend von dem eine im Wesentlichen kreiszylindrische Umfangskontur aufweisenden Steckabschnitt 17 trichterförmig auf. Insoweit weist das Lagergehäuse 19 im Bereich des Lagerabschnitts bzw. der Gehäuseaussparung 20 eine etwa trichterförmige Gestalt auf, die vorliegend mit zwei in Richtung der Schwenkachsen 12, 13 gegenüberliegenden in etwa parallelen Flachseiten 21, 22 versehen ist.

Das Schraubgetriebe 14, 15 weist bei der gezeigten Ausführungsform ein Gewindemutterelement 14 und ein Gewindespindelelement 15 auf, die zur Übersetzung der Drehbewegung des Abstandselements 5 in die Verlagerungsbewegung der Klemmeinrichtung 9 schraubbeweglich miteinander zusammenwirken. Das Gewindemutterelement 14 und das Gewindespindelelement 15 sind koaxial zu der Längsachse L ausgerichtet. Das Gewindemutterelement 14 ist relativ zu dem Abstandselement 5 um die Längsachse L feststehend. Zu diesem Zweck ist das Gewindemutterelement 14 bei der gezeigten Ausführungsform in einer nicht näher bezeichneten Aussparung eines Stopfenelements 23 festgelegt, das in axialer Richtung in das zweite Stirnende 8 eingesetzt und fest mit dem Abstandselement 5 verbunden ist. Hierdurch wird eine an dem Abstandselement 5 eingeleitete Drehbewegung über das Stopfenelement 23 auf das Gewindemutterelement 14 übertragen.

Das Gewindemutterelement 14 sitzt schraubbeweglich auf einem nicht näher bezeichneten und mit einem korrespondierenden Gewinde versehenen Schaft des Gewindespindelelements 15. Das Gewindespindelelement ist entlang der Längsachse L relativbeweglich zu dem Abstandselement 5 und wirkt kraft- und bewegungsübertragend mit der Klemmeinrichtung 9 zusammen.

Bei der gezeigten Ausführungsform greift das Gewindespindelelement 15 hierzu über ein Bolzenelement 24 mittelbar an der ersten Klemmbacke 10 und der zweiten Klemmbacke 11 an. Das Bolzenelement 24 ist parallel zu der ersten Schwenkachse 12 und der zweiten Schwenkachse 13 orientiert und mit einer Querbohrung 25 versehen, die zur Aufnahme des Gewindespindelelements 15 vorgesehen ist. Die Querbohrung 25 ist koaxial zur Längsachse L erstreckt, wobei das Gewindespindelelement 15 entlang seiner axialen Richtung in die Querbohrung 25 eingesteckt ist und im Bereich eines Kopfelements 26 in radialer Richtung des Bolzenelements 24 zugkraftübertragend auf diesem abgestützt ist. Das Bolzenelement 24 durchragt eine nicht näher bezeichnete Bolzenaufnahme der ersten Klemmbacke 10 und eine nicht näher bezeichnete Bolzenaufnahme der zweiten Klemmbacke 11. Diese Bolzenaufnahmen sind in axialer Richtung des Bolzenelements 24 und damit in Breitenrichtung der Klemmbacken 10, 11 durch diese hindurch erstreckt. Das Bolzenelement 24 ist parallel zu den beiden Schwenkachsen 12, 13 orientiert und um jeweils einen Hebelarm H von diesem beabstandet.

Im Übrigen ist die Lagereinrichtung 16 mit einer koaxial zu der Längsachse L erstreckten Durchgangsbohrung versehen, durch welche das Gewindespindelelement 15 in axialer Richtung hindurchragt und zwischen dem Lagerabschnitt 18 bzw. der Gehäuseaussparung 20 und dem zweiten Stirnende 8 und dem dort drehfest angeordneten Gewindemutterelement 14 längserstreckt ist.

Das Gewindemutterelement 14 und das Gewindespindelelement 15 sind mit einem selbsthemmenden Gewinde versehen, wobei vorliegend ein metrisches Gewinde vorgesehen ist.

Die Bedienung der Abstandsvorrichtung 4 zur Verlagerung der Klemmeinrichtung 9 zwischen der Klemm- und der Freigabestellung ist wie folgt:
Ausgehend von der Freigabestellung wird das Abstandselement 5 mit den Fingern einer Hand umgriffen und um die Längsachse L rotiert. Aufgrund der relativbeweglichen Lagerung im Bereich des Steckabschnitts 17 und des zweiten Stirnendes 8 werden die Lagereinrichtung 16 und die an dieser gelagerte Klemmeinrichtung 9 hierbei nicht mitgedreht. Dies jedenfalls dann nicht, wenn die Klemmeinrichtung 9 an dem Trägerprofil 2 anliegt oder eine manuelle Gegenkraft an der Klemmeinrichtung 9 aufgebracht wird, sofern die Klemmeinrichtung nicht an dem Trägerprofil 2 anliegen sollte. Die manuelle Drehbewegung des Abstandselements 5 wird über das Element 23 auf das Gewindemutterelement 14 übertragen. Durch die gewindebewegliche Verbindung mit dem Gewindemutterelement 14 wird das Gewindespindelelement 15 hierbei entlang der Längsachse L in Richtung des Abstandselements 5 verlagert. Die formschlüssige Anlage des Kopfelements 26 am Umfang des Bolzenelements 24 bewirkt, dass das Bolzenelement 24 ebenfalls entlang der Längsachse L in Richtung des Abstandselements 5 gezogen wird. Diese Bewegung wird über die Bolzenaufnahmen auf die Klemmbacken 10, 11 übertragen, so dass diese um ihre jeweilige Schwenkachse 12, 13 aufeinander zu geschwenkt werden.

Der Bewegungsablauf ausgehend von der Klemm- in die Freigabestellung erfolgt sinngemäß in umgekehrter Weise, wobei zur Unterstützung der Verlagerung der Klemmbacken 10, 11 ein zeichnerisch nicht dargestelltes Federelement vorgesehen sein kann, das in Bezug auf die Längsachse L zwischen der Lagereinrichtung 16 und dem Abstandselement 5 zugewandten Stirnendbereichen der Klemmbacken 10, 11 angeordnet und abgestützt sein kann.

Die anhand der vorliegenden Figuren ersichtliche Gestaltung der Befestigungseinrichtung 7 ist im Hinblick auf die Ausführung der Erfindung nicht wesentlich und wird deshalb nicht im Detail erläutert. Eine Ausnahme bildet die Befestigung der Befestigungseinrichtung 7 an dem Abstandselement 5: Die Befestigungseinrichtung 7 ist um die Längsachse L drehmomentfest an dem ersten Stirnende 6 und damit dem Abstandselement 5abgestützt. Hierdurch kann die vorbeschriebene Verlagerung der Klemmeinrichtung 9 zwischen der Klemm- und der Freigabestellung auch mittels einer an der Befestigungseinrichtung 7 angreifenden manuellen Drehbewegung bewirkt werden. Mit anderen Worten ausgedrückt, kann die Befestigungseinrichtung 7 aufgrund der drehmomentfesten Abstützung an dem Abstandselement 5 gleichzeitig als Betätigungselement für die Klemmeinrichtung 9 fungieren.

Zur Fixierung der Befestigungseinrichtung 7 an dem Abstandselement 5 ist eine Schraubverbindung 27 vorgesehen. Die Schraubverbindung 27 fixiert die Befestigungseinrichtung 7 in axialer Richtung und gestattet gleichzeitig eine um die Längsachse L gerichtete relative Drehbeweglichkeit gegenüber dem Abstandselement 5. Zur drehmomentfesten Abstützung der Befestigungseinrichtung 7 ist ein Drehanschlag 34, 35 vorgesehen. Der Drehanschlag 34, 35 begrenzt die Drehbeweglichkeit der Befestigungseinrichtung 7. Hierzu weist der Drehanschlag 34, 35 bei der gezeigten Ausführungsform einen ersten Anschlagabschnitt 34 und einen zweiten Anschlagabschnitt 35 auf. Der erste Anschlagabschnitt 34 ist an der Befestigungseinrichtung 7 angeordnet. Der zweite Anschlagabschnitt 35 ist an dem Abstandselement 5 angeordnet. Vorliegend ist der erste Anschlagabschnitt 34 in Form einer in axialer Richtung unterseitig von der Befestigungseinrichtung 7 abragenden Anschlagnocke N gestaltet. Die Anschlagnocke N greift in axialer Richtung in eine an dem ersten Stirnende 6 ausgebildete Drehführungsbahn 36 ein. Die Drehführungsbahn 36 bildet eine konzentrisch um die Längsachse L des Abstandselements 5 erstreckte Kreisbahn, die mittels des zweiten Anschlagsabschnitts 35 unterbrochen ist. Sobald die Anschlagnocke N zur Anlage an den zweiten Anschlagabschnitt 35 gelangt, erfolgt eine drehmomentfeste Bewegungsübertragung der Bewegung der Befestigungseinrichtung auf das Abstandselement 5. Der Drehanschlag 34, 35 ist vorliegend derart gestaltet, dass die Befestigungseinrichtung 7 um 320° relativ zu dem Abstandselement 5 um die Längsachse L gedreht werden kann, bevor die beiden Anschlagabschnitte 34, 35 aneinander anschlagen. Der Drehanschlag 34, 35 ermöglicht, dass die Befestigungseinrichtung 7 zur Sicherung des Rahmenprofils P drehbeweglich positioniert werden kann, ohne dass hierdurch zwangsläufig eine Verlagerungsbewegung der Klemmeinrichtung 9 bewirkt wird.

Weiter weisen die Klemmbacken 10, 11 an ihren nicht näher bezeichneten und einander zugewandten Innenseiten jeweils eine konkave Klemmfläche 28, 29 auf. Diese können auch als erste Klemmfläche 28 und zweite Klemmfläche 29 bezeichnet werden. Die Klemmflächen 28, 29 sind zum Umgreifen und Klemmen des Trägerprofils 2 vorgesehen und weisen eine auf die Gestaltung des Außenumfangs des Trägerprofils 2 abgestimmte konkave Formgebung auf. Diese ist bei der gezeigten Ausführungsform halbkreisförmig, so dass die Klemmflächen 28, 29 in der Klemmstellung eine in etwa kreiszylindrische Klemmaussparung zur Aufnahme des Trägerprofils 2 umgrenzen.

Weiter weisen die Klemmbacken 10, 11 an ihren Innenseiten jeweils eine Schrägfläche 31, 32 auf, die auch als erste Schrägfläche 31 und zweite Schrägfläche 32 bezeichnet werden können. Die Schrägflächen 31, 32 umgrenzen in der Klemmstellung einen Einführspalt 33, der entlang der Längsachse L in die Klemmaussparung 30 mündet. In der Freigabestellung kann das Trägerprofil 2 durch den Einführspalt 33 in die Klemmaussparung 30 eingeführt werden. Die Axialrichtung der zylindrischen Klemmaussparung 30 und die Längserstreckungsrichtung des Einführspalts 30 sind aufgrund der schrägen Orientierung der Schrägflächen 31, 32 zueinander nicht parallel. Dabei ist die Axialrichtung der Klemmaussparung 30 vorliegend parallel zu den Schwenkachsen 12, 13 orientiert. Die Längserstreckungsrichtung des Einführspalts 30 ist dementgegen in etwa unter 20° bis 30° schräg gegenüber der Orientierung der Schwenkachsen 12, 13. Sowohl die Axialrichtung der Klemmaussparung 30 als auch die Längserstreckungsrichtung des Einführspalts 33 sind vorliegend senkrecht zur Längsachse L orientiert.

## Patentansprüche

1. Abstandsvorrichtung (4) für ein Trägersystem (1) für ein Kraftfahrzeug, aufweisend
- ein Abstandselement (5), das entlang seiner Längsachse (L) zwischen seinem ersten Stirnende (6) und seinem zweiten Stirnende (8) längserstreckt ist,
- eine Befestigungseinrichtung (7), die an dem ersten Stirnende (6) angeordnet und zum Befestigen eines Rahmenprofils (P) eines Ladegutes (F) vorgesehen ist,
- eine Klemmeinrichtung (9), die an dem zweiten Stirnende (8) angeordnet und zum Festklemmen an einem fahrzeugfest positionierbaren Trägerprofil (2) des Trägersystems (1) vorgesehen ist,
- wobei die Klemmeinrichtung (9) relativ zu dem Abstandselement (5) zwischen einer Klemmstellung zum Festklemmen an dem Trägerprofil (2) und einer Freigabestellung zur Freigabe von dem Trägerprofil (2) verlagerbar ist,
- und wobei die Klemmeinrichtung (9) wenigstens eine erste Klemmbacke (10) und eine zweite Klemmbacke (11) aufweist, die zur Verlagerung der Klemmeinrichtung (9) zwischen der Klemm- und der Freigabestellung jeweils um eine Schwenkachse (12, 13) relativ zu dem Abstandselement (5) schwenkbeweglich verlagerbar sind,
- und aufweisend eine Stelleinrichtung (S) mit einem Schraubgetriebe (14, 15), das einends mit der Klemmeinrichtung (9) wirkverbunden ist und mittels dessen eine an der Abstandsvorrichtung (4) angreifende manuelle Drehbetätigungsbewegung in eine Verlagerungsbewegung der Klemmeinrichtung (9) zwischen der Klemm- und der Freigabestellung übersetzbar ist,
- **dadurch gekennzeichnet, dass** eine Lagereinrichtung (16) vorgesehen ist, mittels derer die Klemmeinrichtung (9) und das Abstandselement (5) um die Längsachse (L) relativ zueinander drehbeweglich aneinander gelagert sind, und dass das Schraubgetriebe (14, 15) andernends mit dem Abstandselement (5) wirkverbunden ist, wodurch eine um die Längsachse (L) gerichtete manuelle Drehung des Abstandselements (5) die Verlagerungsbewegung der Klemmeinrichtung (9) zwischen der Klemm- und der Freigabestellung bewirkt.

2. Abstandsvorrichtung (4) nach Anspruch 1, **dadurch gekennzeichnet, dass** die Lagereinrichtung (16) einen Steckabschnitt (17) aufweist, der um die Längsachse (L) des Abstandselements (5) drehbeweglich und in Radialrichtung des Abstandselements (5) formschlüssig mit dem zweiten Stirnende (8) des Abstandselements (5) zusammengesteckt ist.

3. Abstandsvorrichtung (4) nach Anspruch 1 oder 2, **dadurch gekennzeichnet, dass** die Lagereinrichtung (16) einen Lagerabschnitt (18) aufweist, an welchem die erste Klemmbacke (10) und die zweite Klemmbacke (11) um die jeweilige Schwenkachse (12, 13) schwenkbeweglich gelagert sind.

4. Abstandsvorrichtung (4) nach Anspruch 3, **dadurch gekennzeichnet, dass** die erste Klemmbacke (10) und die zweite Klemmbacke (11) relativ zu der Lagereinrichtung (16) entlang der Längsachse (L) unbeweglich an dem Lagerabschnitt (18) gelagert sind.

5. Abstandsvorrichtung (4) nach einem der vorhergehenden Ansprüche, **dadurch gekennzeichnet, dass** die Lagereinrichtung (16) ein Lagergehäuse (19) aufweist, das relativ drehbeweglich mit dem zweiten Stirnende (8) des Abstandselements zusammengesteckt ist, und in welchem die erste Klemmbacke (10) und die zweite Klemmbacke (11) wenigstens abschnittsweise im Bereich der jeweiligen Schwenkachse (12, 13) aufgenommen sind.

6. Abstandsvorrichtung (4) nach einem der vorhergehenden Ansprüche, **dadurch gekennzeichnet, dass** das Schraubgetriebe (14, 15) ein Gewindespindelelement (15) und ein Gewindemutterelement (14) aufweist, die zur Übersetzung der Drehbewegung des Abstandselements (5) in die Verlagerungsbewegung der Klemmeinrichtung (9) schraubbeweglich zusammenwirken.

7. Abstandsvorrichtung (4) nach Anspruch 6, **dadurch gekennzeichnet, dass** das Gewindemutterelement (14) um die Längsachse (L) drehmomentfest und axial unbeweglich an dem zweiten Stirnende (8) des Abstandselements (5) befestigt ist, und dass das Gewindespindelelement (15) entlang der Längsachse (L) beweglich und axial kraft- und bewegungsübertragend an der ersten Klemmbacke (10) und der zweiten Klemmbacke (11) angreift.

8. Abstandsvorrichtung (4) nach Anspruch 6 oder 7, **dadurch gekennzeichnet, dass** das Gewindespindelelement (15) koaxial zu der Längsachse (L) des Abstandselements orientiert ist und über ein Bolzenelement (24) an der ersten Klemmbacke (10) und der zweiten Klemmbacke (11) angreift, wobei das Bolzenelement (24) parallel zu den Schwenkachsen (12, 13) orientiert ist und jeweils eine Bolzenaufnahme der Klemmbacken (10, 11) durchragt, die um jeweils einen Hebelarm (H) von der jeweiligen Schwenkachse (12, 13) durch die jeweilige Klemmbacke (10, 11) erstreckt ist.

9. Abstandsvorrichtung (4) nach einem der vorhergehenden Ansprüche, **dadurch gekennzeichnet, dass** die Befestigungseinrichtung (7) um die Längsachse (L) drehmomentfest an dem ersten Stirnende (6) des Abstandselements (5) abgestützt ist, wodurch eine um die Längsachse (L) gerichtete manuelle Drehung der Befestigungseinrichtung (7) die Verlagerungsbewegung der Klemmeinrichtung (9) zwischen der Klemm- und der Freigabestellung bewirkt.

10. Abstandsvorrichtung (4) nach Anspruch 9, **dadurch gekennzeichnet, dass** die Befestigungseinrichtung (7) mittels eines Drehanschlags (34, 35) begrenzt drehbeweglich drehmomentfest an dem ersten Stirnende (6) des Abstandselements (5) abgestützt ist.

11. Abstandsvorrichtung (4) nach einem der vorhergehenden Ansprüche, **dadurch gekennzeichnet, dass** die Klemmbacken (10, 11) an ihren einander zugewandten Innenseiten jeweils eine konkave Klemmfläche (28, 29) und eine Schrägfläche (31, 32) aufweisen, wobei die Klemmflächen (28, 29) eine zylindrische Klemmaussparung (30) zum Klemmen des Trägerprofils (2) ausbilden und die Schrägflächen (31, 32) einen entlang der Längsachse (L) des Abstandselements (5) in die Klemmaussparung (30) mündenden Einführspalt (33) zum Einführen des Trägerprofils (2) in die Klemmaussparung (30) ausbilden, und wobei der Einführspalt (33) relativ zu einer Axialrichtung der Klemmaussparung (30) schräg längserstreckt ist.

12. Trägersystem (1) eines Kraftfahrzeugs, mit einem fahrzeugfest positionierbaren Trägerprofil (2) und einer an dem Trägerprofil (2) festgeklemmten Abstandsvorrichtung (4), nach einem der Ansprüche 1-11.

## Claims

1. Spacer device (4) for a carrier system (1) for a motor vehicle, comprising
a spacer element (5) which is elongated along its longitudinal axis (L) between its first end face (6) and its second end face (8),
a fastening device (7), which is arranged at the first end face (6) and is provided for fastening a frame profile (P) of a load (F),
a clamping device (9), which is arranged at the second end face (8) and is configured for clamping to a support profile (2) of the carrier system that can be positioned in a fixed position on the vehicle,
wherein the clamping device (9) can be displaced relative to the spacer element (5) between a clamping position for clamping to the support profile (2) and a release position for releasing from the support profile (2),
and wherein the clamping device (9) has at least a first clamping jaw (10) and a second clamping jaw (11), which can each be pivotably displaced about a pivot axis (12, 13) relative to the spacer element (5) in order to displace the clamping device (9) between the clamping position and the release position,
and having an adjusting device (S) with a screw gear (14, 15) which is operatively connected at one end to the clamping device (9) and by means of which a manual rotary actuating movement acting on the spacer device (4) can be translated into a displacement movement of the clamping device (9) between the clamping position and the release position,
**characterized in that** a bearing device (16) is provided, by means of which the clamping device (9) and the spacer element (5) are mounted on one another so as to be rotatable relative to one another about the longitudinal axis (L), and **in that** the screw gear (14, 15) is operatively connected at the other end to the spacer element (5), whereby manual rotation of the spacer element (5) about the longitudinal axis (L) causes the displacement movement of the clamping device (9) between the clamping position and the release position.

2. Spacer device (4) according to claim 1, **characterized in that** the bearing device (16) has a plug-in section (17) which can rotate about the longitudinal axis (L) of the spacer element (5) and is plugged together with the second end face (8) of the spacer element (5) in a form-fitting manner in the radial direction of the spacer element (5).

3. Spacer device (4) according to claim 1 or 2, **characterized in that** the bearing device (16) has a bearing section (18) on which the first clamping jaw (10) and the second clamping jaw (11) are mounted so as to be pivotable about the respective pivot axis (12, 13).

4. Spacer device (4) according to claim 3, **characterized in that** the first clamping jaw (10) and the second clamping jaw (11) are mounted immovably on the bearing section (18) relative to the bearing device (16) along the longitudinal axis (L).

5. Spacer device (4) according to one of the preceding claims, **characterized in that** the bearing device (16) has a bearing housing (19) which is plugged together with the second end face (8) of the spacer element so as to be relatively rotatable, and in which the first clamping jaw (10) and the second clamping jaw (11) are accommodated at least in sections in the region of the respective pivot axis (12, 13).

6. Spacer device (4) according to one of the preceding claims, **characterized in that** the screw gear (14, 15) has a threaded spindle element (15) and a threaded nut element (14), which interact in a screw-moving manner to translate the rotary movement of the spacer element (5) into the displacement movement of the clamping device (9).

7. Spacer device (4) according to claim 6, **characterized in that** the threaded nut element (14) is attached to the second end face (8) of the spacer element (5) in a torque-transmitting and axially immovable manner about the longitudinal axis (L), and **in that** the threaded spindle element (15) engages on the first clamping jaw (10) and the second clamping jaw (11) in a manner which is movable along the longitudinal axis (L) and axially transmits force and movement.

8. Spacer device (4) according to claim 6 or 7, **characterized in that** the threaded spindle element (15) is oriented coaxially to the longitudinal axis (L) of the spacer element and engages on the first clamping jaw (10) and the second clamping jaw (11) via a bolt element (24), wherein the bolt element (24) is oriented parallel to the pivot axes (12, 13) and projects through a respective bolt receptacle of the clamping jaws (10, 11), which extends by a respective lever arm (H) from the respective pivot axis (12, 13) through the respective clamping jaw (10, 11).

9. Spacer device (4) according to one of the preceding claims, **characterized in that** the fastening device (7) is supported torque transmitting about the longitudinal axis (L) on the first end face (6) of the spacer element (5), whereby a manual rotation of the fastening device (7) directed about the longitudinal axis (L) effects the displacement movement of the clamping device (9) between the clamping position and the release position.

10. Spacer device (4) according to claim 9, **characterized in that** the fastening device (7) is supported torque transmitting on the first end face (6) of the spacer element (5) by means of a rotary stop (34, 35) with limited rotational movement.

11. Spacer device (4) according to one of the preceding claims, **characterized in that** the clamping jaws (10, 11) each have a concave clamping surface (28, 29) and an inclined surface (31, 32) on their inner sides facing one another, the clamping surfaces (28, 29) forming a cylindrical clamping recess (30) for clamping the support profile (2) and the inclined surfaces (31, 32) form an insertion gap (33), which opens into the clamping recess (30) along the longitudinal axis (L) of the spacer element (5), for inserting the support profile (2) into the clamping recess (30), and wherein the insertion gap (33) is extended obliquely longitudinally relative to an axial direction of the clamping recess (30).

12. Carrier system (1) of a motor vehicle, the carrier system (1) having a vehicle-mounted and positionable support profile (2) and a spacer device (4) according to one of claims 1 to 11, the spacer device (4) being clamped to the support profile (2).

## Revendications

1. Dispositif d'écartement (4) pour un système de support (1) pour un véhicule automobile, présentant
un élément d'espacement (5) qui est étiré longitudinalement le long de son axe longitudinal (L) entre sa première extrémité frontale (6) et sa deuxième extrémité frontale (8),
un dispositif de fixation (7) qui est disposé sur la première extrémité frontale (6) et qui est prévu pour fixer un profilé de cadre (P) d'un chargement (F),
un dispositif de serrage (9), qui est disposé sur la deuxième extrémité frontale (8) et qui est destiné à être serré sur un profilé porteur (2) du système de support pouvant être positionné de manière fixe sur le véhicule (1) est prévue,
dans lequel le dispositif de serrage (9) peut être déplacé par rapport à l'élément d'écartement (5) entre une position de serrage pour le serrage sur le profilé de support (2) et une position de libération pour la libération du profilé de support (2),
et le dispositif de serrage (9) présentant au moins une première mâchoire de serrage (10) et une deuxième mâchoire de serrage (11), qui peuvent être déplacées de manière pivotante autour d'un axe de pivotement (12, 13) par rapport à l'élément d'écartement (5) pour déplacer le dispositif de serrage (9) entre la position de serrage et la position de libération,
et présentant un dispositif de réglage (S) avec un engrenage à vis (14, 15), qui est en liaison active à une extrémité avec le dispositif de serrage (9) et au moyen duquel un mouvement d'actionnement rotatif manuel agissant sur le dispositif d'écartement (4) peut être traduit en un mouvement de déplacement du dispositif de serrage (9) entre la position de serrage et la position de libération,
**caractérisé en ce qu'**il est prévu un dispositif de palier (16) au moyen duquel le dispositif de serrage (9) et l'élément d'écartement (5) sont montés l'un sur l'autre de manière à pouvoir tourner l'un par rapport à l'autre autour de l'axe longitudinal (L), et **en ce que** l'engrenage à vis (14, 15) est relié fonctionnellement à l'autre extrémité à l'élément d'écartement (5), de sorte qu'une rotation manuelle de l'élément d'écartement (5) orientée autour de l'axe longitudinal (L) provoque le mouvement de déplacement du dispositif de serrage (9) entre la position de serrage et la position de libération.

2. Dispositif d'écartement (4) selon la revendication 1, **caractérisé en ce que** le dispositif de palier (16) présente une section d'emboîtement (17) qui est mobile en rotation autour de l'axe longitudinal (L) de l'élément d'écartement (5) et qui est emboîtée par complémentarité de forme dans la direction radiale de l'élément d'écartement (5) avec la deuxième extrémité frontale (8) de l'élément d'écartement (5).

3. Dispositif d'écartement (4) selon la revendication 1 ou 2, **caractérisé en ce que** le dispositif de palier (16) présente une section de palier (18) sur laquelle la première mâchoire de serrage (10) et la deuxième mâchoire de serrage (11) sont logées de manière à pouvoir pivoter autour de l'axe de pivotement respectif (12, 13).

4. Dispositif d'écartement (4) selon la revendication 3, **caractérisé en ce que** la première mâchoire de serrage (10) et la deuxième mâchoire de serrage (11) sont montées sur la section de palier (18) de manière immobile par rapport au dispositif de palier (16) le long de l'axe longitudinal (L).

5. Dispositif d'écartement (4) selon l'une des revendications précédentes, **caractérisé en ce que** le dispositif de palier (16) présente un logement de palier (19) qui est emboîté de manière relativement mobile en rotation avec la deuxième extrémité frontale (8) de l'élément d'écartement, et dans lequel la première mâchoire de serrage (10) et la deuxième mâchoire de serrage (11) sont logées au moins par sections dans la zone de l'axe de pivotement respectif (12, 13).

6. Dispositif d'écartement (4) selon l'une quelconque des revendications précédentes, **caractérisé en ce que** le mécanisme à vis (14, 15) comprend un élément de broche filetée (15) et un élément d'écrou fileté (14) qui coopèrent par vissage pour traduire le mouvement de rotation de l'élément d'écartement (5) en un mouvement de déplacement du dispositif de serrage (9).

7. Dispositif d'écartement (4) selon la revendication 6, **caractérisé en ce que** l'élément d'écrou fileté (14) est fixé à la deuxième extrémité frontale (8) de l'élément d'écartement (5) de manière résistante au couple de rotation autour de l'axe longitudinal (L) et immobile dans le sens axial, et **en ce que** l'élément de broche filetée (15) s'engage de manière mobile le long de l'axe longitudinal (L) et transmettant la force et le mouvement dans le sens axial sur la première mâchoire de serrage (10) et la deuxième mâchoire de serrage (11).

8. Dispositif d'écartement (4) selon la revendication 6 ou 7, **caractérisé en ce que** l'élément de broche filetée (15) est orienté coaxialement à l'axe longitudinal (L) de l'élément d'écartement et s'engage sur la première mâchoire de serrage (10) et la deuxième mâchoire de serrage (11) par l'intermédiaire d'un élément de boulon (24), l'élément de boulon (24) étant orienté parallèlement aux axes de pivotement (12, 13) et traversant respectivement un logement de boulon des mâchoires de serrage (10, 11), qui s'étend respectivement d'un bras de levier (H) depuis l'axe de pivotement respectif (12, 13) à travers la mâchoire de serrage respective (10, 11).

9. Dispositif d'espacement (4) selon un de précédent revendications, **caractérisé en ce que** le dispositif de fixation (7) est supporté de manière résistante au couple autour de l'axe longitudinal (L) sur la première extrémité frontale (6) de l'élément d'écartement (5), de sorte qu'une rotation manuelle du dispositif de fixation (7) orientée autour de l'axe longitudinal (L) provoque le mouvement de déplacement du dispositif de serrage (9) entre la position de serrage et la position de libération.

10. Dispositif d'espacement (4) selon revendication 9, par **caractérisé en ce que** que le site dispositif de fixation (7) est appuyé sur la première extrémité frontale (6) de l'élément d'écartement (5) au moyen d'une butée rotative (34, 35) de manière à pouvoir effectuer un mouvement de rotation limité.

11. Dispositif d'espacement (4) selon un de precedent revendications, **caractérisé en ce que** les mâchoires de serrage (10, 11) présentent sur leurs côtés intérieurs tournés l'un vers l'autre respectivement une surface de serrage concave (28, 29) et une surface inclinée (31, 32), les surfaces de serrage (28, 29) formant un évidement de serrage cylindrique (30) pour le serrage du profilé porteur (2) et les surfaces inclinées (31, 32) forment une fente d'introduction (33) débouchant dans l'évidement de serrage (30) le long de l'axe longitudinal (L) de l'élément d'écartement (5) pour l'introduction du profilé de support (2) dans l'évidement de serrage (30), et la fente d'introduction (33) étant étirée longitudinalement en oblique par rapport à une direction axiale de l'évidement de serrage (30).

12. Système de portage (1) d'un véhicule à moteur, avec un fixe sur le véhicule positionnable profilé de support (2) et un dispositif d'écartement (4) serré sur le profilé de support (2), selon l'une des revendications 1 à 11.
